# EUROPEAN PATENT APPLICATION

(11) **EP 1 083 418 A2**
(43) Date of publication of application: **14.03.2001**
(21) Application number: 00307680.9
(22) Date of filing: 06.09.2000
(51) Int. Cl.: G01G 23/37

(54) **Configurable electronic component for a scale**

(30) Priority: 07.09.1999 US 391242
(71) Applicant: Cybratech (1998) Ltd., Netanya (IL)
(72) Inventor: Klimberg, Giora, Ra'anana (IL); Benavidor, Emanuel, Netanya 42314 (IL)
(74) Representative: Charig, Raymond Julian

(57) **Abstract**

An electronic scale component is a chip or chipset. It includes a processor integrated into the chip or chipset, the processor capable of performing a plurality of arithmetic and scale-related functions, a database stored on the chip or chipset for associating input sequences with a selected set of the functions, and a circuit integrated into the chip or chipset. The component is connectable to at least one weight sensor, and the circuit includes an analog interface to said weight sensor and an analog to digital converter connected to the analog interface and to the processor. A configurable electronic scale component is a chip or chipset. It includes a processor integrated into the chip or chipset, the processor capable of performing a plurality of arithmetic and scale-related functions, and a database stored on the chip or chipset, capable of receiving configuration data that define a particular scale and which enable a portion of the functions.

## Description

### FIELD OF THE INVENTION

The present invention relates to scales in general and to electronic scales in particular.

### BACKGROUND OF THE INVENTION

Electronic scales are used in a variety of weighing applications including price computing scales, counting scales, weight indicators, check weighers, truck scales, postal scales, livestock scales and high/low scales. Current electronic scales include printed circuit boards typically having 100 or more components. The scale includes also a variety of software functions and algorithms that implement the different weighing and computing functions required by the customers and the regulatory authorities. The large number of components and functions complicates and lengthens the time of scale design of different models, increases the board assembly cost, generates large inventories, and ultimately increases the time-to-market and cost.

Digital weight sensors may also be found, providing a digital output from the weight sensor, after amplification and conversion of the weight sensor's analog signal to a digital format. A commercially available digital weight sensor is the Smart Compression Cell (SCC) from Revere Transducers, Inc. of Tustin, California, USA.

Cash registers having programmable keyboards and displays are known. In some applications such cash registers are connected to a scale, gathering the weight data through serial communication and providing the cashier with the user-interface (display and keyboard).

US Patent 4,481,587 to Daniels, Jr. discloses an apparatus for providing interchangeable keyboard functions.

### SUMMARY OF THE INVENTION

The present invention is directed to a configurable universal electronic scale component that replaces most of the electronic circuitry and software found in current electronic weighing applications.

There is therefore provided in accordance with a preferred embodiment of the present invention an electronic scale component which is a chip or chipset. It includes a processor integrated into the chip or chipset, the processor capable of performing a plurality of arithmetic and scale-related functions, a database stored on the chip or chipset for associating input sequences with a selected set of the functions, and a circuit integrated into the chip or chipset. The component is connectable to at least one weight sensor, and the circuit includes an analog interface to the weight sensor and an analog to digital converter connected to the analog interface and to the processor.

Moreover, in accordance with a preferred embodiment of the present invention, the selected set of functions defines a particular scale.

There is also provided in accordance with a preferred embodiment of the present invention a configurable electronic scale component which is a chip or chipset. It includes a processor integrated into the chip or chipset, the processor capable of performing a plurality of arithmetic and scale-related functions, and a database stored on the chip or chipset, capable of receiving configuration data that define a particular scale and which enable a portion of the functions.

Moreover, in accordance with a preferred embodiment of the present invention, the chip or chipset is connectable to at least one weight sensor and the chip or chipset further includes a circuit integrated into the chip or chipset. The circuit includes an analog interface to the weight sensor, and an analog to digital converter connected to the analog interface and to the processor.

Furthermore, in accordance with a preferred embodiment of the present invention, the circuit has a gain drift of less than 25 parts per million per degree Centigrade (PPM/°C), and/or a zero offset drift of less than 52 PPM/°C, and/or a noise level of less than 0.5 microVolt (µV).

Additionally, in accordance with a preferred embodiment of the present invention, the particular scale is one of the following types: a price computing scale, a counting scale, and a weight indicator, a check weigher, a truck scale, a postal scale, a livestock scale and a high/low scales.

There is also provided in accordance with a preferred embodiment of the present invention a digital weight sensor including at least one weight sensor, and an electronic scale component connected to the at least one weight sensor. The component is a chip or chipset as described hereinabove.

### BRIEF DESCRIPTION OF THE DRAWINGS

The present invention will be understood and appreciated more fully from the following detailed description taken in conjunction with the appended drawings in which:
Figs. 1A, 1B and 1C are perspective views of exemplary electronic scales;
Fig. 2 is a block diagram illustration of the scales of Figs. 1A, 1B and 1C, according to a preferred embodiment of the present invention;
Fig. 3 is a block diagram illustration of the three logical units that form the software run by the processor of Fig. 2, according to a preferred embodiment of the present invention; and
Figs. 4A, 4B and 4C are illustrations of exemplary message strings and corresponding exemplary field displays, according to a preferred embodiment of the present invention.

### DETAILED DESCRIPTION OF THE PRESENT INVENTION

The present invention is directed to configurable, universal electronic scale component that replaces most of the electronic circuitry and software found in current electronic weighing applications. According to a preferred embodiment of the present invention, the component is a chipset and according to another preferred embodiment of the present invention, the component is a single chip. The electronic scale component has standard hardware and a basic set of functions. A non-volatile memory unit integrated into the electronic scale chip or chipset stores a database containing configuration data of the scale. Different configuration data result in different scale models that are operated differently and have different functionality. The configuration data is defined with a user-friendly software application using simple, high-level visual and text entries, and downloaded to the database. No software engineering skills are required from the user, and the user is not required to make any software code modifications.

A scale manufacturer can use identical electronic scale components for different scale models, each model having specific configuration data downloaded to the database of the electronic scale component. Since the electronic scale component replaces the 100 or so components and the software previously used in the model, design, qualification, manufacturing and maintenance of models is significantly reduced. Modifying the scale to different user needs is simple and immediate, and does not require software or hardware modifications.

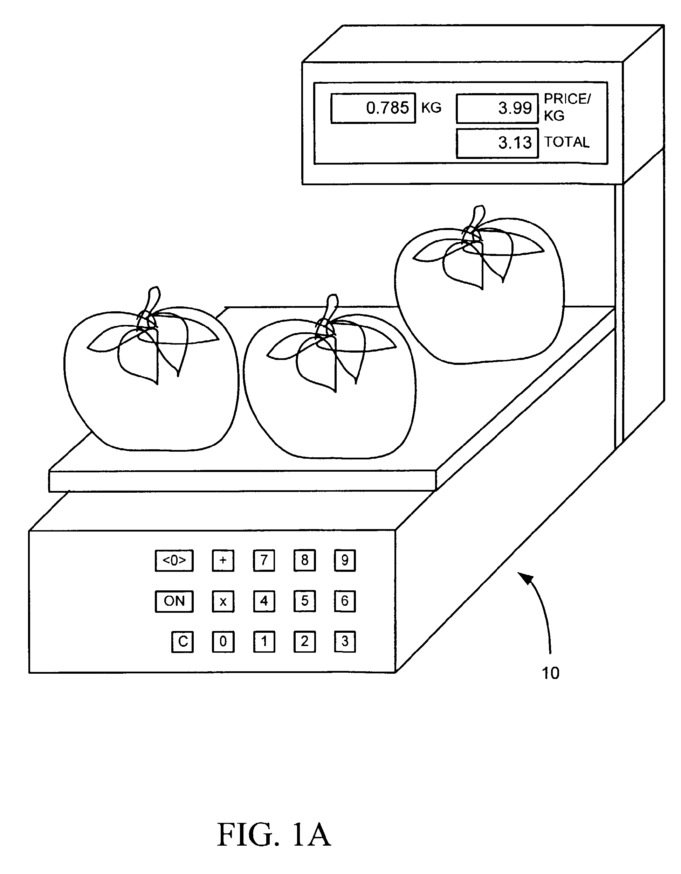

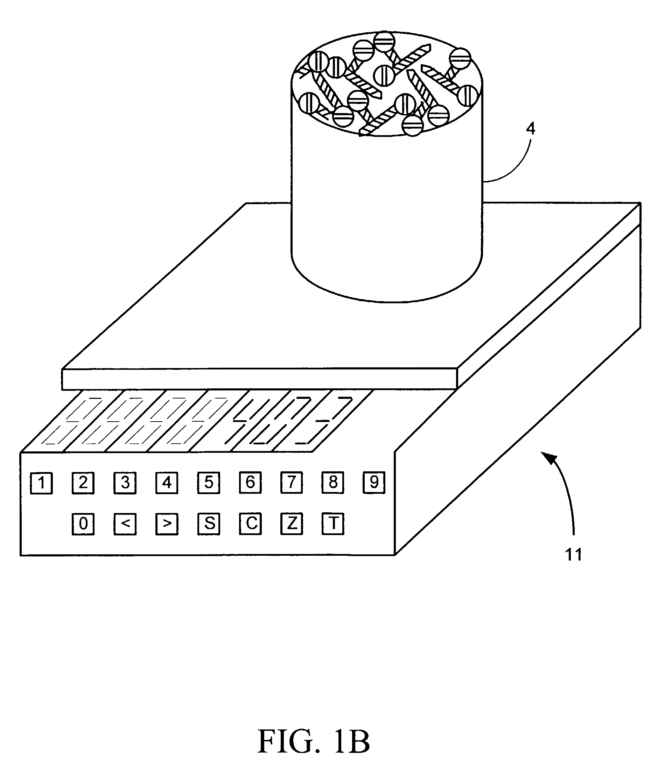

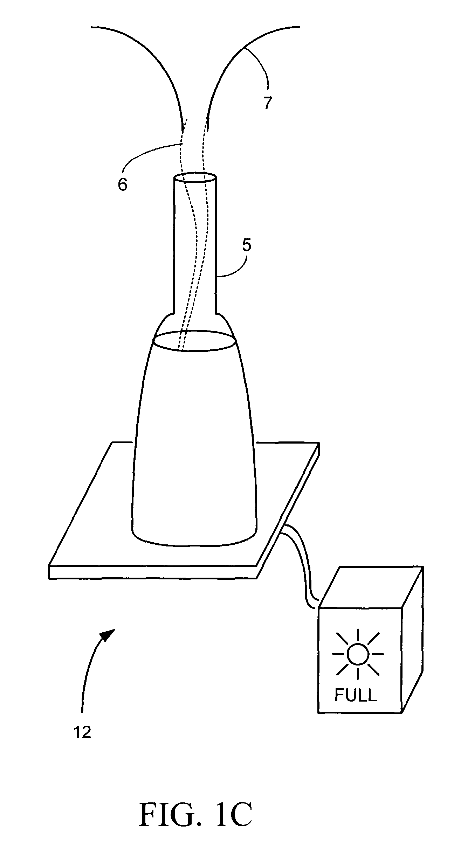

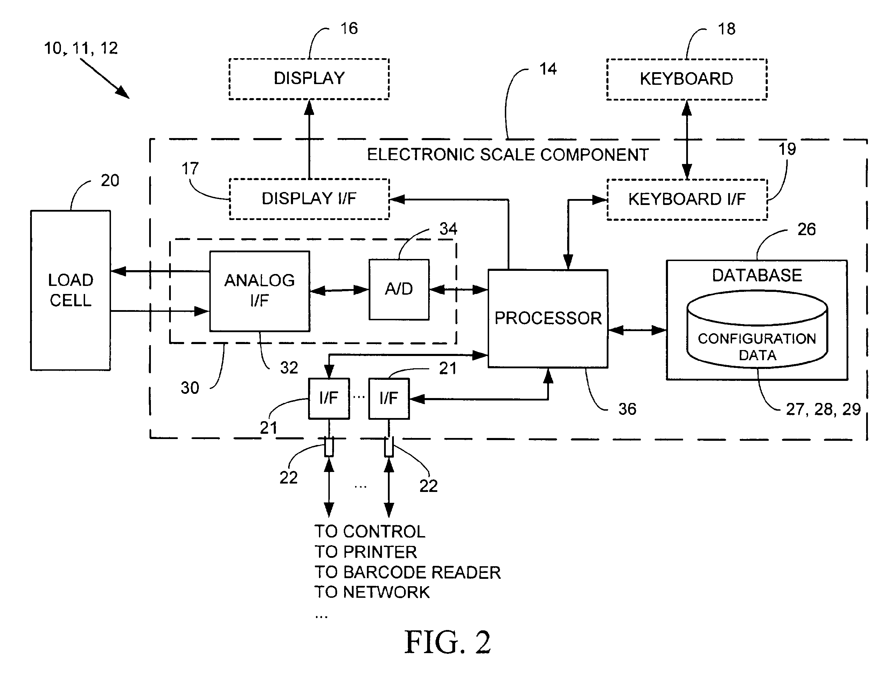

Reference is now made to Figs. 1A, 1B and 1C, which are perspective views of electronic scales 10, 11 and 12, respectively, and to Fig. 2, which is a block diagram illustration of the scales of Figs. 1A, 1B and 1C, in which like reference numerals refer to similar elements. Scale 10 is an example of a price computing scale, which computes the total price of a good placed on the scale based upon its weight and its price by weight. For example, a grocery cashier enters the price by weight, 3.99, of tomatoes and places the tomatoes on the scale 10. The scale 10 then weighs the tomatoes, calculating a weight of 0.785, and computes the total price of the tomatoes, which in the present example is 3.13.

Scale 11 is an example of a counting scale, which calculates the number of pieces of a particular item based upon its item weight and the total weight. For example, a hardware store clerk places a sample of ten screws on the scale 11, and the scale 11 weighs the sample and calculates the item weight of screws. The clerk then places a can 4 of screws on the scale 11. The scale 11 then weighs the screws and calculates the number of screws in the can 4, which in the present example is 403.

Scale 12 is an example of a weight indicator, which indicates, for example, when the weight of a particular item has reached a set point. For example, a bottle 5 on a conveyor belt is filled with liquid 6 through a funnel 7. When the weight of the bottle 5 reaches a predetermined set point, the light indicator "FULL" is turned on.

As shown in Fig. 2, scales 10, 11 and 12 comprise an electronic scale component 14 according to a preferred embodiment of the present invention and at least one weight sensor 20 (only one is shown) connected to the electronic scale component 14. Throughout the description and claims, the term "weight sensor" is used to include all types of weight sensors producing an analog signal, including, but not limited to, load cells, strain gauges, hydraulic weight sensors, pneumatic weight sensors, inductive weight sensors, elastic weight sensors, vibration-based weight sensors and oscillation-based weight sensors.

Scales 10 and 11 further comprise a display 16 and a keyboard 18, both connected to the electronic scale component 14. Examples of display 16 include, but are not limited to, a light-emitting diode (LED) display, a liquid crystal display (LCD), a vacuum fluorescent display (VFD), an alphanumeric display, a 7-segment display, a graphic display and a dot matrix display.

The electronic scale component 14 also comprises interface (I/F) chips 17, 19 and 21 that connect the processor 36 to the various peripheral devices. For example, a display interface chip 17 is connected to the display 16 and a keyboard interface chip 19 is connected to the keyboard 18.

The electronic scale component 14 has serial and other (for example, but not limited to, parallel, wireless and infrared) communication ports 22. The communication ports 22 are used to connect the electronic scale component 14 to additional peripheral devices, for example, but not limited to, a control unit, a printer, a barcode reader and/or a network (not shown). The additional interface chips 21 are connected to the ports 22 to enable communication with the additional peripheral devices.

The electronic scale component 14 also comprises a circuit 30 connected to the at least one weight sensor 20 and to the processor 36. The circuit 30 comprises an analog interface 32 connected to the at least one weight sensor 20, and an analog-to-digital (A/D) converter 34 connected to the analog interface 32 and to the processor 36.

Even though the purpose and functionality of the price computing scale 10, the counting scale 11 and the weight indicator 12 differ greatly, according to the present invention, they comprise the same electronic scale component 14.

The electronic scale component 14 also comprises a database 25 stored in a non-volatile memory unit 26 which is integrated into the electronic scale component 14. The database 25 has configuration data stored therein. According to a preferred embodiment of the present invention, the memory unit 26 is an electrically erasable programmable read only memory (EEPROM), although it will be appreciated that any non-volatile memory is equally suitable for the memory unit 26 and is within the scope of the present invention.

Using a user-friendly software application, to be described in more detail hereinbelow, the scale manufacturer defines the configuration data corresponding to the desired scale functionality. The configuration data is downloaded to the database 25. In the present example, the electronic scale component 14 has been configured to provide the functionality of a price computing scale, and the configuration data 27 is stored in the database 25. For the scale 11, the electronic scale component 14 has been configured to provide the functionality of a counting scale 11, and the configuration data 28 is stored in the database 25. For the scale 12 the electronic scale component 14 has been configured to provide the functionality of weight indicator, and the configuration data 29 is stored in the database 25.

It will be appreciated that while only a few examples of electronic scale types have been described, the present invention is equally applicable to all types of electronic scales, including, but not limited to, price computing scales, counting scales, weight indicators, check weighers, truck scales, postal scales, livestock scales and high/low scales. For each of these types, the electronic scale component 14 of the present invention is used, and appropriate configuration data is downloaded to the database 25 in order to define the particular scale.

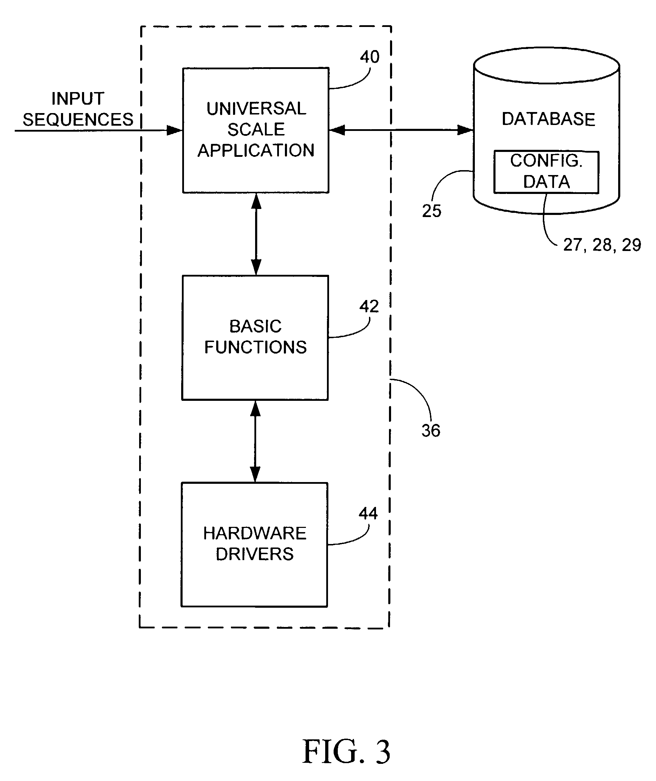

Reference is now made additionally to Fig. 3, which is a block diagram illustration of the three logical units that form the software run by the processor 36 of Fig. 2. The three logical units are a universal scale application 40, a plurality of basic arithmetic and scale-related functions 42, and hardware drivers 44. The hardware drivers 44 drive the interface chips 17, 19, and 21 and the devices connected to them. The basic functions 42 include, but are not limited to, the functions listed in Appendix A. Some of the basic functions 42 call the hardware drivers 44. The universal scale application 40 reacts to input sequences and calls basic functions 42 in accordance with the configuration data 27, 28 or 29. The input sequences may be key sequences coming from the keyboard 18 via the keyboard I/F 19 (Fig. 2). Alternatively, the input sequences may be sequences coming from a remote control via one of the communication interfaces 21 (Fig. 2), such as using the RS-232 interface, an infrared channel, etc.

The universal scale application 40 defines a predetermined set of display screens, which include, but are not limited to, the screens listed in Appendix B. According to a preferred embodiment of the present invention, the display screens have three display fields. In the weight screen, for example, which is appropriate for a price computing scale, the fields are weight, price per weight, and the product of the two. In a weight indicator, for example, the display screen may have a single light indicator that is lit when a set weight is reached.

The configuration data includes global parameters, and settings for each of the predetermined sets of display screens. The global parameters include, but are not limited to, a definition of the keys of the keyboard 18, various setup parameters, and, if desired, single-character representations of up to four vendors. Since the keys of the keyboard 18 are defined through the configuration data, the arrangement and number of active keys of the keyboard 18 is entirely flexible. The setup parameters include, but are not limited to, the sample rate, gain, offset, average and resolution of the A/D converter 34, the units of weight measurement, calibration data, offset ranges, mechanical noise filters, motion filters, stability threshold, zero tracking range, tare range, currency conversion, the baud rate and handshaking for communication with other devices and the host.

For each of the predetermined set of display screens, the configuration data includes the following information:
a) which keys of the keyboard 18 are enabled for the display screen;
b) definitions of input sequences which are enabled for the display screen and the basic function which is associated which each of the input sequences; and
c) for each display field, a collection of message strings.

Each combination of the three elements (input sequence, basic functions and display screens) defines a macro that implements a logical operation used by the scale operator during its operation.

The basic functions determine which of the message strings will be displayed in each field for a particular screen. For example, they determine what operation (such as multiply) will be performed on the input parameters (the parameters may be: weight, price, number of product units or others) and how and where the result will be displayed, stored and/or transmitted via a communication interface.

Entering an input sequence activates the basic function associated with the sequence and results in performing the function, and/or displaying the results, and/or string data in the memory and/or transmitting data through the communication interfaces.

All the definitions and operation described above may also be implemented through the communication interfaces, where the data strings on the communication channel replace the keyboard inputs described hereinabove.

The message strings are represented such that the number of digits/characters in each field is configurable, subject to a predetermined maximum, and that the format, timing and content of the displayed data can be configured. For example, configuration data for a scale to be sold to English-speaking countries may include a message string with the text "Change", while the same message string will have the text "Canbio" in the configuration data for a scale to be sold to Spanish-speaking countries.

According to a preferred embodiment of the present invention, each message string is a series of characters, in which an underscore indicates a blank character in the display field, a lowercase x indicates a numeric value, and any other character is displayed as is. For those scales where the user wishes to separate sales by vendor, an uppercase X in a message string indicates that the single-character representation of the vendor is displayed at that point in the display field.

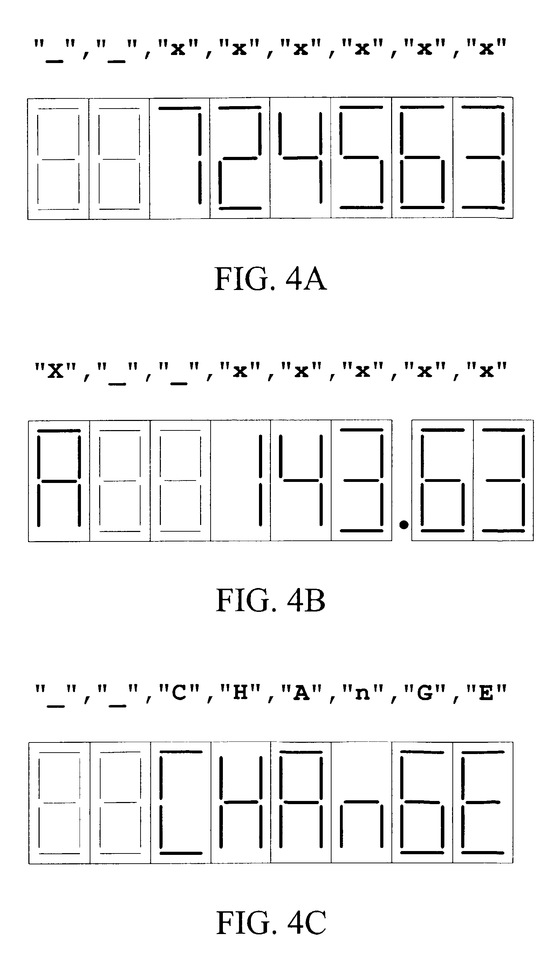

For example, as shown in Figs. 4A, 4B and 4C, to which reference is now made, the message string
"_", "_", "x", "x", "x", "x", "x", "x"
indicates that a 6-digit numerical value will be displayed in the field, for example, 724563, while the message string
"X", "_", "_", "x", "x", "x", "x", "x"
indicates that a 5-digit numerical value will be displayed in the field, for example, 143.63, with the leftmost character indicating the vendor, for example "A". The message string
"_", "_", "C", "H", "A", "n", "G", "E"
will result in the word "CHAnGE" being displayed in the field.

The circuit 30 (namely, the analog interface 32 and A/D converter 34) is designed have a low noise level, and low gain drift and low zero offset drift over temperature. The gain drift of the circuit 30 is less than 25 parts per million per degree Centigrade (PPM/°C), the zero offset drift of the circuit 30 is less than 52 PPM/°C, and the noise level of the circuit 30 is less than 0.5 microVolts (µV). This is accomplished using compensation techniques well known in the literature of analog instrumentation circuits. See for example the following application bulletins from Burr-Brown Corporation of Tucson, Arizona, USA:
"Selecting an A/D Converter" by Larry Gaddy, AB-098, April 1995;
"What Designers Should Know About Data Converter Drift", AB-063, September 1986, reprinted from *Electronics,* November 10, 1977, McGraw-Hill, Inc.;
"Giving ΔΣ Converters a Little Gain Boost with a Front End Analog Gain Stage", by Bonnie Baker, AB-107, January 1997;
"Extending the Common-Mode Range of Difference Amplifiers", by R. Mark Stitt, AB-015, August 1990;
"Principles of Data Acquisition and Conversion", AB-082, May 1994;
"Single-Supply, Low-Power Measurements of Bridge Networks", by Bonnie Baker, AB-033A, April 1993;
"Programmable-Gain Instrumentation Amplifiers", by David Jones and R. Mark Stitt, AB-042, September 1992.

It will be appreciated by persons skilled in the art that the present invention is not limited by what has been particularly shown and described herein above, rather the scope of the invention is defined by the claims that follow Appendix A and Appendix B.

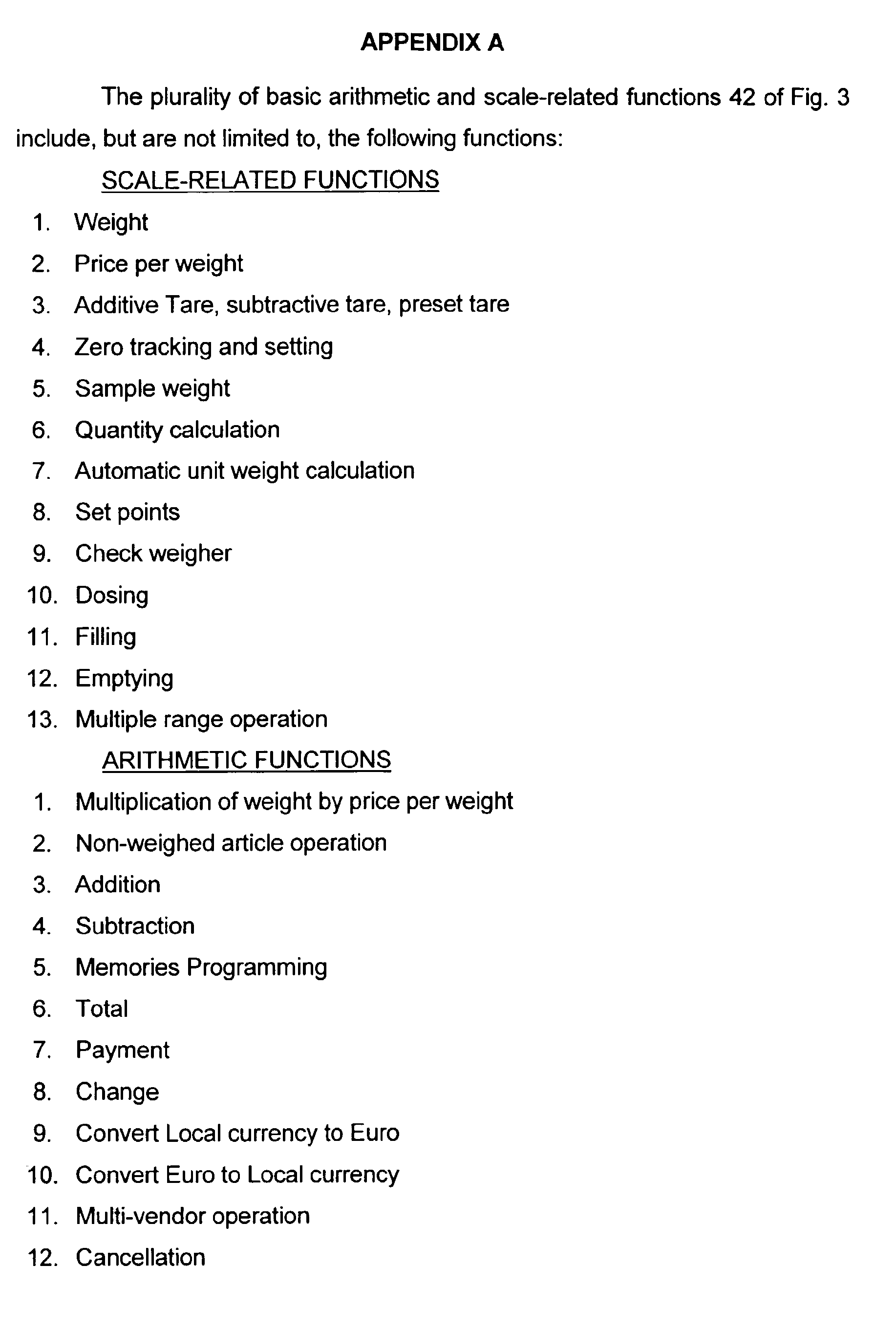

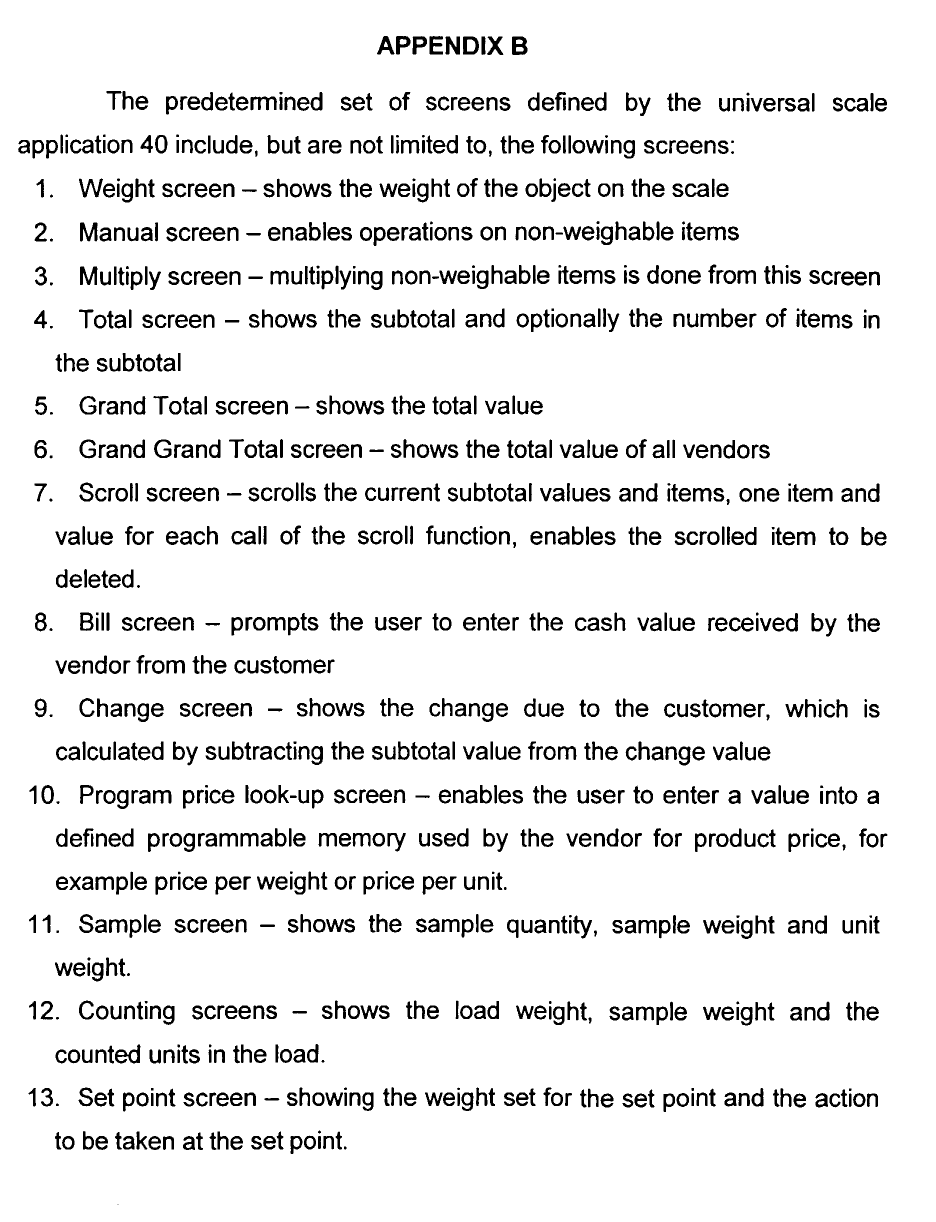

## Claims

1. An electronic scale chip which is connectable to at least one weight sensor, the chip comprising:
a processor integrated into said chip, said processor capable of performing a plurality of arithmetic and scale-related functions;
a database stored on said chip for associating input sequences with a selected set of said functions; and
a circuit integrated into said chip, said circuit comprising:
an analog interface to said weight sensor; and
an analog to digital converter connected to said analog interface and to said processor.

2. An electronic scale chip according to claim 1, wherein said circuit has a gain drift of less than 25 parts per million per degree Centigrade (PPM/°C) and/or said circuit has a zero offset drift of less than 52 PPM/°C and/or said circuit has a noise level of less than 0.5 microVolt (µV).

3. An electronic scale chip according to claim 1, wherein said selected set of functions defines a particular scale.

4. An electronic scale chip according to claim 3, wherein said particular scale is one of the following types: a price computing scale, a counting scale, a weight indicator, a check weigher, a truck scale, a postal scale, a livestock scale and a high/low scales.

5. A configurable electronic scale chip comprising:
a processor integrated into said chip, said processor capable of performing a plurality of arithmetic and scale-related functions; and
a database stored on said chip, capable of receiving configuration data that define a particular scale and which enable a portion of said functions.

6. An electronic scale chip according to claim 5, wherein said chip is connectable to at least one weight sensor and said chip further comprises a circuit integrated into said chip, said circuit comprising:
an analog interface to said weight sensor; and
an analog to digital converter connected to said analog interface and to said processor.

7. An electronic scale chip according to claim 6, wherein said circuit has a gain drift of less than 25 PPM/°C and/or said circuit has a zero offset drift of less than 52 PPM/°C and/or said circuit has a noise level of less than 0.5 µV.

8. An electronic scale chip according to claim 5, wherein said particular scale is one of the following types: a price computing scale, a counting scale, and a weight indicator, a check weigher, a truck scale, a postal scale, a livestock scale and a high/low scales.

9. An electronic scale chipset which is connectable to at least one weight sensor, the chipset comprising:
a processor integrated into said chipset, said processor capable of performing a plurality of arithmetic and scale-related functions;
a database stored on said chipset for associating input sequences with a selected set of said functions; and
a circuit integrated into said chipset, said circuit comprising:
an analog interface to said weight sensor; and
an analog to digital converter connected to said analog interface and to said processor.

10. An electronic scale chipset according to claim 9, wherein said circuit has a gain drift of less than 25 PPM/°C and/or said circuit has a zero offset drift of less than 52 PPM/°C and/or said circuit has a noise level of less than 0.5 µV.

11. An electronic scale chipset according to claim 9, wherein said selected set of functions defines a particular scale.

12. An electronic scale chipset according to claim 11, wherein said particular scale is one of the following types: a price computing scale, a counting scale, and a weight indicator, a check weigher, a truck scale, a postal scale, a livestock scale and a high/low scales.

13. A configurable electronic scale chipset comprising:
a processor integrated into said chipset, said processor capable of performing a plurality of arithmetic and scale-related functions; and
a database stored on said chipset, capable of receiving configuration data that define a particular scale and which enable a portion of said functions.

14. An electronic scale chipset according to claim 13, wherein said chipset is connectable to at least one weight sensor and said chipset further comprises a circuit integrated into said chipset, said circuit comprising:
an analog interface to said weight sensor; and
an analog to digital converter connected to said analog interface and to said processor.

15. An electronic scale chipset according to claim 14, wherein said circuit has a gain drift of less than 25 PPM/°C and/or said circuit has a zero offset drift of less than 52 PPM/°C and/or said circuit has a noise level of less than 0.5 µV.

16. An electronic scale chipset according to claim 13, wherein said particular scale is one of the following types: a price computing scale, a counting scale, and a weight indicator, a check weigher, a truck scale, a postal scale, a livestock scale and a high/low scales.

17. A digital weight sensor comprising:
at least one weight sensor; and
an electronic scale chip connected to said at least one weight sensor, said chip comprising:
a processor integrated into said chip, said processor capable of performing a plurality of arithmetic and scale-related functions;
a database stored on said chip for associating input sequences with a selected set of said functions; and
a circuit integrated into said chip, said circuit comprising:
an analog interface to said at least one weight sensor; and
an analog to digital converter connected to said analog interface and to said processor.

18. A digital weight sensor according to claim 17, wherein said circuit has a gain drift of less than 25 PPM/°C and/or said circuit has a zero offset drift of less than 52 PPM/°C and/or said circuit has a noise level of less than 0.5 µV.

19. A digital weight sensor comprising:
at least one weight sensor; and
an electronic scale chip connected to said at least one weight sensor, said chip comprising:
a processor integrated into said chip, said processor capable of performing a plurality of arithmetic and scale-related functions; and
a database stored on said chip, capable of receiving configuration data that define a particular scale and which enable a portion of said functions.

20. A digital weight sensor according to claim 19, wherein said chip further comprises a circuit integrated into said chip, said circuit comprising:
an analog interface to said at least one weight sensor; and
an analog to digital converter connected to said analog interface and to said processor.

21. A digital weight sensor according to claim 20, wherein said circuit has a gain drift of less than 25 PPM/°C and/or said circuit has a zero offset drift of less than 52 PPM/°C and/or said circuit has a noise level of less than 0.5 µV.

22. A digital weight sensor comprising:
at least one weight sensor; and
an electronic scale chipset connected to said at least one weight sensor, said chipset comprising:
a processor integrated into said chipset, said processor capable of performing a plurality of arithmetic and scale-related functions;
a database stored on said chipset for associating input sequences with a selected set of said functions; and
a circuit integrated into said chipset, said circuit comprising:
an analog interface to said at least one weight sensor; and
an analog to digital converter connected to said analog interface and to said processor.

23. A digital weight sensor according to claim 22, wherein said circuit has a gain drift of less than 25 PPM/°C and/or said circuit has a zero offset drift of less than 52 PPM/°C and/or said circuit has a noise level of less than 0.5 µV.

24. A digital weight sensor comprising:
at least one weight sensor; and
an electronic scale chipset connected to said at least one weight sensor, said chipset comprising:
a processor integrated into said chipset, said processor capable of performing a plurality of arithmetic and scale-related functions; and
a database stored on said chipset, capable of receiving configuration data that define a particular scale and which enable a portion of said functions.

25. A digital weight sensor according to claim 24, wherein said chipset further comprises a circuit integrated into said chipset, said circuit comprising:
an analog interface to said at least one weight sensor; and
an analog to digital converter connected to said analog interface and to said processor.

26. A digital weight sensor according to claim 25, wherein said circuit has a gain drift of less than 25 PPM/°C and/or said circuit has a zero offset drift of less than 52 PPM/°C and/or said circuit has a noise level of less than 0.5 µV.

27. An electronic scale comprising:
at least one weight sensor; and
an electronic scale chip connected to said at least one weight sensor, said chip comprising:
a processor integrated into said chip, said processor capable of performing a plurality of arithmetic and scale-related functions;
a database stored on said chip for associating input sequences with a selected set of said functions; and
a circuit integrated into said chip, said circuit comprising:
an analog interface to said at least one weight sensor; and
an analog to digital converter connected to said analog interface and to said processor.

28. An electronic scale according to claim 27, wherein said circuit has a gain drift of less than 25 PPM/°C and/or said circuit has a zero offset drift of less than 52 PPM/°C and/or said circuit has a noise level of less than 0.5 µV.

29. An electronic scale comprising:
at least one weight sensor; and
an electronic scale chip connected to said at least one weight sensor, said chip comprising:
a processor integrated into said chip, said processor capable of performing a plurality of arithmetic and scale-related functions; and
a database stored on said chip, capable of receiving configuration data that define a particular scale and which enable a portion of said functions.

30. An electronic scale according to claim 30, wherein said chip further comprises a circuit integrated into said chip, said circuit comprising:
an analog interface to said at least one weight sensor; and
an analog to digital converter connected to said analog interface and to said processor.

31. An electronic scale according to claim 30, wherein said circuit has a gain drift of less than 25 PPM/°C and/or said circuit has a zero offset drift of less than 52 PPM/°C and/or said circuit has a noise level of less than 0.5 µV.

32. An electronic scale comprising:
at least one weight sensor; and
an electronic scale chipset connected to said at least one weight sensor, said chipset comprising:
a processor integrated into said chipset, said processor capable of performing a plurality of arithmetic and scale-related functions;
a database stored on said chipset for associating input sequences with a selected set of said functions; and
a circuit integrated into said chipset, said circuit comprising:
an analog interface to said at least one weight sensor; and
an analog to digital converter connected to said analog interface and to said processor.

33. An electronic scale according to claim 32, wherein said circuit has a gain drift of less than 25 PPM/°C and/or said circuit has a zero offset drift of less than 52 PPM/°C and/or said circuit has a noise level of less than 0.5 µV.

34. An electronic scale comprising:
at least one weight sensor; and
an electronic scale chipset connected to said at least one weight sensor, said chipset comprising:
a processor integrated into said chipset, said processor capable of performing a plurality of arithmetic and scale-related functions; and
a database stored on said chipset, capable of receiving configuration data that define a particular scale and which enable a portion of said functions.

35. An electronic scale according to claim 34, wherein said chipset further comprises a circuit integrated into said chipset, said circuit comprising:
an analog interface to said at least one weight sensor; and
an analog to digital converter connected to said analog interface and to said processor.

36. An electronic scale according to claim 35, wherein said circuit has a gain drift of less than 25 PPM/°C and/or said circuit has a zero offset drift of less than 52 PPM/°C and/or said circuit has a noise level of less than 0.5 µV.

37. An electronic scale comprising:
at least one weight sensor; and
an electronic scale chip connected to said at least one weight sensor, said chip comprising:
a circuit integrated into said chip, said circuit comprising:
an analog interface to said at least one weight sensor; and
an analog to digital converter connected to said analog interface,
wherein said circuit has a gain drift of less than 25 PPM/°C, a zero offset drift of less than 52 PPM/°C and a noise level of less than 0.5 µV.
